# EUROPEAN PATENT APPLICATION

(11) **EP 4 756 629 A1**
(43) Date of publication of application: **10.06.2026**
(21) Application number: 24922657.2
(22) Date of filing: 02.08.2024
(51) Int. Cl.: G06F 13/36

(54) **INFORMATION PROCESSING DEVICE**

(71) Applicant: Unitex Corporation, Machida-shi, Tokyo 194-0021 (JP)
(72) Inventor: MARUYAMA, Tatsuya, Machida-shi, Tokyo 194-0021 (JP); FUJII, Masanobu, Machida-shi, Tokyo 194-0021 (JP)
(74) Representative: Gislon, Gabriele
(86) International application number: PCT/JP2024/027685
(87) International publication number: WO 2026/028421

(57) **Abstract**

The present invention relates to an information processor enabling data and commands to be transmitted and received between a USB-compliant information processor and a SAS-compliant information processor.

The information processor executes a USB/SAS protocol conversion for enabling data and commands to be transmitted and received between a USB-compliant information processor and a SAS-compliant information processor, and comprises: at least one USB connector for connecting the USB-compliant information processor; at least one SAS connector for connecting the SAS-compliant information processor; and a USB/SAS converter for converting between a USB protocol and a SAS protocol; wherein the USB connector is connected to the USB/SAS converter via a bus, and the USB/SAS converter is connected to the SAS connector via another bus, wherein the data and commands transmitted from the USB-compliant information processor are received to be stored in a memory provided in the USB connector in a USB protocol format, wherein the data and commands are converted into a SAS protocol format by the USB/SAS converter, wherein the data and commands converted into the SAS protocol format by the USB/SAS converter are stored in another memory provided in the SAS connector and are transmitted to the SAS-compliant information processor from said another memory, and wherein the USB/SAS converter is allowed to alter the processing algorithm thereof and is capable of executing parallel processing.

## Description

### FIELD OF THE INVENTION

The present invention relates to a device executing a data conversion for enabling communication between a device and an apparatus, devices, or apparatuses having interfaces with protocols of different methods each other, and particularly relates to a device for enabling communication between a USB device and a SAS device.

### BACKGROUND OF THE INVENTION

Conventionally, in a configuration where information processors have different interfaces, for example, a host computer as one information processor has a USB (Universal Serial Bus) interface (hereinafter referred to as USB I/F) and a drive as the other information processor has a SAS (Serial Attached SCSI) interface (hereinafter referred to as SAS I/F), it is known that a data protocol converter is disposed between the two devices to execute transmitting and receiving data between both devices (Patent Document 1).

### PRIOR ART

### PATENT DOCUMENTS

Patent Document 1: JP 2012-68808 A

### SUMMARY OF THE INVENTION

### PROBLEMS TO BE SOLVED BY THE INVENTION

An SAS applied as an interface of a storage device described in Patent Document 1 transmits data of a predetermined unit (for example, 1 block) after dividing the data into a predetermined size (for example, per frame). Since a data transmission rate in the SAS is faster than that in the USB, due to a difference in the data transmission rates between both interfaces, in some cases, data processing in the USB is stalled because the data transmission from the USB does not meet the reception of the data transmitted from the SAS.

In the case of stalling of the data processing in the USB, when a transmission standby time of the data in the SAS is over 1 ms, the storage device (SAS) halts the data transmission and retransmits the data from the beginning of the block. However, in this case of the USB, while the data processing is stalled, the reception condition is continued. Thus, even if the SAS retransmits the data that has been transmitted once from the beginning of the block, the USB properly receives the data as those that have been continuously transmitted.

However, in such a case, the host computer (USB) may already have received data, and when the data is retransmitted from the storage device (SAS), the host computer may receive inappropriate data that overlaps with the already received data.
In other words, in the above case, the data cannot be sent or received properly, and the transmitting/receiving process may end in failure, or a data mismatch may occur. It may also take an excessive amount of time to complete the process.

In view of the above disadvantages, an object of the present invention is to provide an information processor that properly executes data communication between devices having different interfaces.

### MEANS FOR SOLVING THE PROBLEMS

An information processor according to an embodiment of the present invention executes a USB/SAS protocol conversion for enabling data and commands to be transmitted and received between a USB-compliant information processor and a SAS-compliant information processor, and comprises:
at least one USB connector for connecting the USB-compliant information processor;
at least one SAS connector for connecting the SAS-compliant information processor; and
a USB/SAS converter for converting between a USB protocol and a SAS protocol;
wherein the USB connector is connected to the USB/SAS converter via a bus, and the USB/SAS converter is connected to the SAS connector via another bus,
wherein the data and commands transmitted from the USB-compliant information processor are received to be stored in a memory provided in the USB connector in a USB protocol format, wherein the data and commands are converted into a SAS protocol format by the USB/SAS converter,
wherein the data and commands converted into the SAS protocol format by the USB/SAS converter are stored in another memory provided in the SAS connector and are transmitted to the SAS-compliant information processor from said another memory, and
wherein the USB/SAS converter is allowed to alter the processing algorithm thereof and is capable of executing parallel processing.

An information processing method according to an embodiment of the present invention executes a USB/SAS protocol conversion for enabling data and commands to be transmitted and received between a USB-compliant information processor and a SAS-compliant information processor, and comprises:
a USB connection step for connecting the USB-compliant information processor via at least one USB connector;
a SAS connection step for connecting the SAS-compliant information processor via at least one SAS connector; and
a USB/SAS conversion step for converting between a USB protocol and a SAS protocol by a USB/SAS converter;
wherein the USB connector is connected to the USB/SAS converter via a bus, and the USB/SAS converter is connected to the SAS connector via another bus,
wherein the method further comprises:
   a USB reception and storage step for receiving the data and commands transmitted from the USB-compliant information processor to store the data and commands into a memory provided in the USB connector in a USB protocol format;
   a USB/SAS conversion step for converting the data and commands into a SAS protocol format by the USB/SAS converter; and
   a SAS storage and transmission step for storing the data and commands converted into the SAS protocol format by the USB/SAS converter in another memory provided in the SAS connector and transmitting the data and commands to the SAS-compliant information processor from said another memory; and
   wherein the USB/SAS converter is allowed to alter the processing algorithm thereof and is capable of executing parallel processing.

### ADVANTAGES OF INVENTION

According to the present invention, it is possible to rewrite a program and modify, add, and delete functions because an FPGA is applied to a chip for processing data conversion in an information processor.
Moreover, high-speed processing is possible because the program can execute parallel processing efficiently.

Incidentally, the present invention makes it possible to execute high-speed and smooth processing between devices with different types of interfaces, and also makes it possible to easily add functions by modifying the program and so forth.

### BRIEF DESCRIPTION OF THE DRAWINGS

Fig. 1 is a block diagram showing a configuration of an information processor according to an embodiment of the present invention.
Fig. 2 is a block diagram showing a configuration of a part of the information processor according to the embodiment of the present invention.
Fig. 3 is a block diagram showing a configuration of another part of the information processor according to the embodiment of the present invention.
Fig. 4 is a flowchart showing an example of a data transmission executed by the information processor according to the embodiment of the present invention.
Fig. 5 is a flowchart showing another example of a data transmission executed by the information processor according to the embodiment of the present invention.

### EMBODIMENTS OF THE INVENTION

Embodiments of the present invention are described below with reference to the drawings. However, the components described in the following embodiments are merely examples and are not intended to limit the technical scope of the present invention. Incidentally, the terms "figure" and "drawing" in the specification may refer to a concept or specific data, depending on the context. When the terms "figure" and "drawing" refer to data, they are images in any format.

For the convenience of the explanation, the same reference sign assigned to each drawing indicates the same or equivalent part unless otherwise noted, and unnecessarily detailed explanations may be omitted for elements with similar structures and/or functions. Further, redundant explanations are simplified or omitted as appropriate.
The symbol "~" may be used to indicate a numerical value range in the present embodiments, and the numerical values listed before and after the "~" are included in the numerical value range.

### [Embodiments]

### (Information Processor)

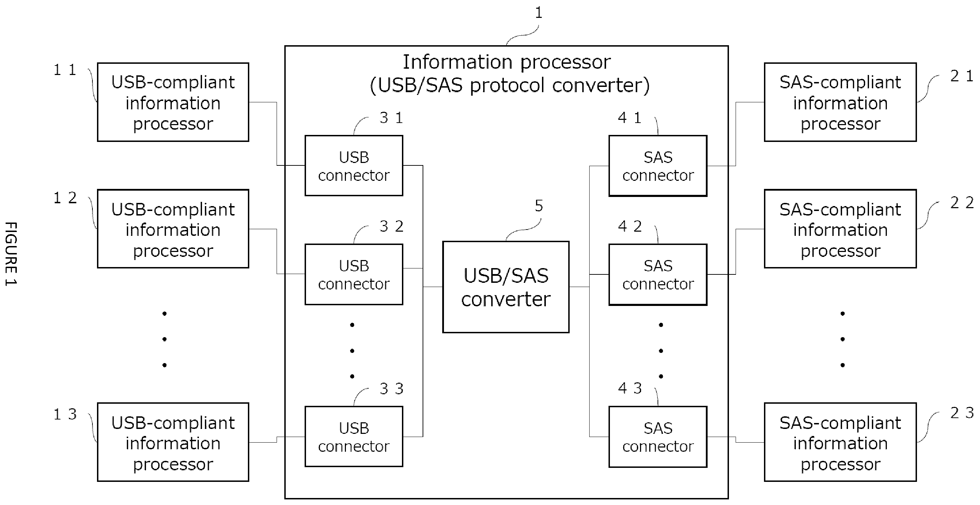

Fig. 1 is a block diagram showing a configuration of an information processor according to an embodiment of the present invention.
The information processor executes a USB/SAS protocol conversion for enabling data and commands to be transmitted and received between a USB-compliant information processor and a SAS-compliant information processor, and thus, this device is also a USB/SAS protocol converter.
As shown in Fig. 1, the information processor 1 comprises at least one USB connector for connecting at least one USB-compliant information processor, wherein a USB connector 31, a USB connector 32, ..., and a USB connector 33 are respectively connected to a USB-compliant information processor 11, a USB-compliant information processor 12, ..., and a USB-compliant information processor 13.

As shown in Fig. 1, the information processor 1 further comprises at least one SAS connector for connecting at least one SAS-compliant information processor, wherein a SAS connector 41, a SAS connector 42, ..., and a SAS connector 43 are respectively connected to a SAS-compliant information processor 21, a SAS-compliant information processor 22, ..., and a SAS-compliant information processor 23.
As shown in Fig. 1, the information processor 1 further comprises a USB/SAS converter 5 for converting between a USB protocol and a SAS protocol.
Each of the USB connector 31, the USB connector 32, ..., and the USB connector 33 is connected to the USB/SAS converter 5 via a bus, and the USB/SAS converter 5 is connected to each of the SAS connector 41, the SAS connector 42, ..., and the SAS connector 43 via another bus.

Pluralities of the data and commands respectively transmitted from the USB-compliant information processor 11, the USB-compliant information processor 12, ..., and the USB-compliant information processor 13 are respectively received by the corresponding USB connector 31, USB connector 32, ..., and USB connector 33 to be stored in each memory provided in the USB connector 31, the USB connector 32, ..., and the USB connector 33 in a USB protocol format.

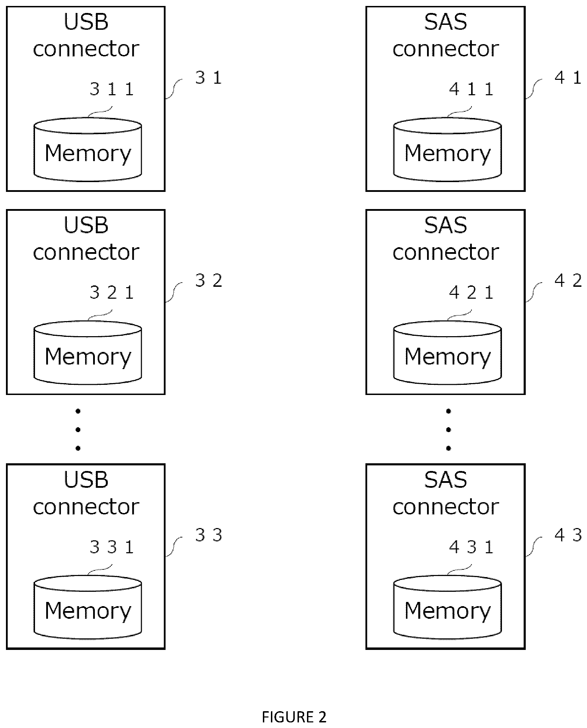

As shown in Fig. 2, the USB connector 31, the USB connector 32, ..., and the USB connector 33 are respectively provided with a memory 311, a memory 321,..., and a memory 331.
The USB/SAS converter 5 shown in Fig. 1 converts each of the pluralities of the data and commands into a SAS protocol format.
The pluralities of the data and commands in the SAS protocol format converted by the USB/SAS converter 5 are respectively stored in memories each of which is provided in the SAS connector 41, the SAS connector 42, ..., and the SAS connector 43 to be respectively transmitted to the corresponding SAS-compliant information processor 21, SAS-compliant information processor 22, ..., and SAS-compliant information processor 23.

The USB/SAS converter 5 is allowed to alter the processing algorithm thereof and is capable of executing parallel processing.
When an FPGA is applied to the information processor 1, which is the USB/SAS protocol converter, the USB/SAS converter 5 has a function of a DMA, each of the USB connector 31, the USB connector 32, ..., and the USB connector 33 has a function of a USB IP, and each of the SAS connector 41, the SAS connector 42, ..., and the SAS connector 43 has a function of a SAS IP.
Each of the USB connector 31, the USB connector 32, ..., and the USB connector 33 has a function of a multiprotocol method compliant to a UASP (USB Attached SCSI Protocol), a BOT (Bulk Only Transport) and so forth as a USB transfer mode, and is allowed to switch between these transfer modes automatically.

When the FPGA is applied to the information processor 1, it is capable of modifying, altering, adding, deleting, etc., a function by modifying, adding, deleting, etc., a program.
As each of the USB-compliant information processor 11, the USB-compliant information processor 12, ..., and the USB-compliant information processor 13, a personal computer is applicable, for example. As each of the SAS-compliant information processor 21, the SAS-compliant information processor 22, ..., and the SAS-compliant information processor 23, a LTO (Linear Tape-Open) drive is applicable, for example.
Moreover, as shown in Fig. 2, the USB connector 31, the USB connector 32, ..., and the USB connector 33 are respectively provided with the memory 311, the memory 321, ..., and the memory 331 which respectively store each of the pluralities of the data and commands transmitted from the USB-compliant information processor 11, the USB-compliant information processor 12, ..., and the USB-compliant information processor 13. The SAS connector 41, the SAS connector 42, ..., and the SAS connector 43 are respectively provided with the memory 411, the memory 421, ..., and the memory 431 each of which stores each of the pluralities of the data and commands subjected to the protocol conversion by the USB/SAS converter 5.

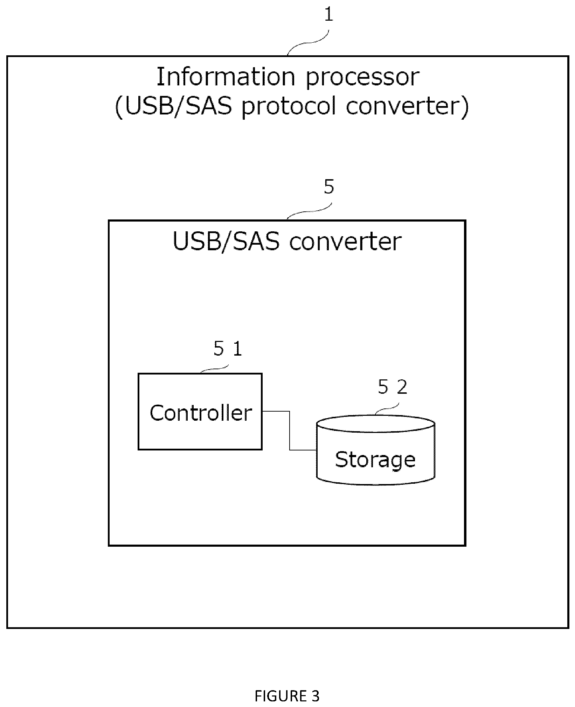

Moreover, as shown in Fig. 3, the USB/SAS converter 5 is provided with a storage 52 that stores a program and so forth for converting the data and commands between the USB protocol and the SAS protocol, and a controller 51 that executes to modify contents of the program stored in the storage 52, to add a new program into the storage 52, to delete the existing program, etc.
Incidentally, the information processor 1 of the present invention is compatible with USB standards such as USB1.1, USB2.0, USB3.0, USB3.1, USB3.2, USB4, etc., and also with standards that will be extended in the future.

Moreover, the information processor 1 of the present invention is compatible with USB transfer modes such as a control transfer, an interrupt transfer, a bulk transfer, an isochronous transfer, etc., and also with transfer modes that will be extended in the future.
Furthermore, the information processor 1 of the present invention is compatible with USB terminals/connectors such as Type-A, Type-B, Type-C, Micro USB, Mini USB connector, etc., and also with transfer modes that will be extended in the future.

Still more, the information processor 1 of the present invention is compatible with computer buses such as VME, SCSI, parallel ATA, USB, IEEE 1394, Low Pin Count, Ethernet, PCI Express, HDMI (registered trademark), Thunderbolt, etc., and also with buses that will be extended in the future.
In addition, the information processor 1 of the present invention is compatible with hardware interfaces such as USB, Thunderbolt, IEEE 1394, Ethernet, eSATA, SCSI, PCI-Express, serial SCSI, serial ATA, InfiniBand, fiber channel, PS/2 connector, RS-232, etc., and also with hardware interfaces that will be extended in the future.

### (Information Processing Method)

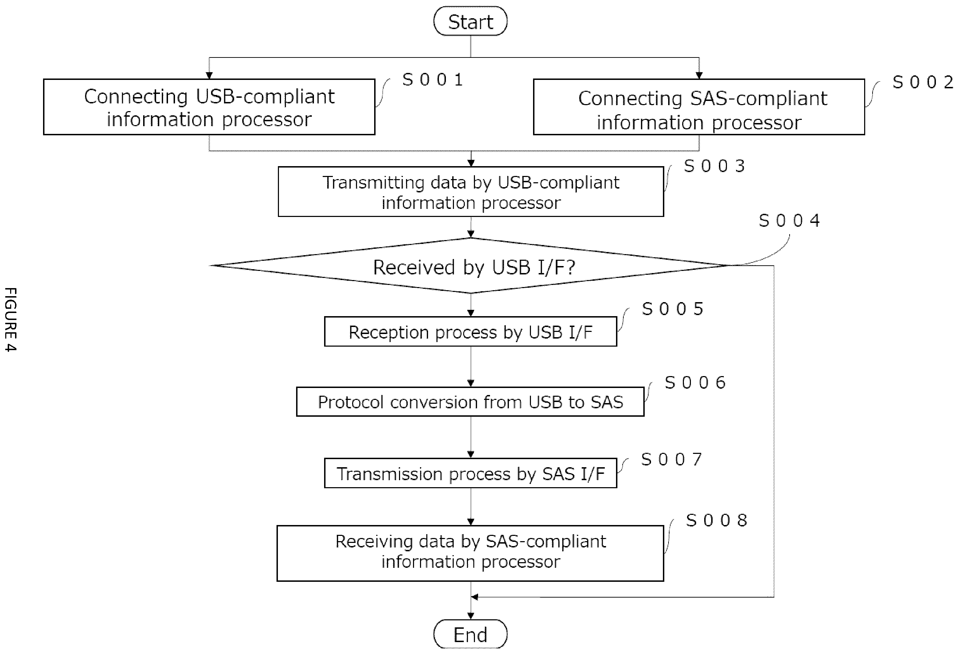

According to the flowchart shown in Fig. 4, a data transmission from the USB-compliant information processor to the SAS-compliant information processor executed by the information processor of the embodiment of the present invention is explained.
As shown in Fig. 4, in a step S001, the information processor 1 connects to at least one USB-compliant information processor, including the USB-compliant information processor 11, the USB-compliant information processor 12, ..., and the USB-compliant information processor 13, and in a step S002, the information processor 1 connects to at least one SAS-compliant information processor, including the SAS-compliant information processor 21, the SAS-compliant information processor 22, ..., and the SAS-compliant information processor 23.
In a step S003, each of the USB-compliant information processor 11, the USB-compliant information processor 12, ..., and the USB-compliant information processor 13 transmits the data and commands.

In a step 004, when respective USB I/Fs, each of which is provided in the USB connector 31, the USB connector 32, ..., and the USB connector 33, receive each of the pluralities of the data and commands, the process proceeds to a step S005.
In the step 004, when the respective USB I/Fs, each of which is provided in the USB connector 31, the USB connector 32, ..., and the USB connector 33, do not receive each of the pluralities of the data and commands, the process terminates.
In the step 005, the USB I/Fs, each of which is provided in the USB connector 31, the USB connector 32, ..., and the USB connector 33, execute each reception processing, and respectively store each of the pluralities of the data and commands into the memory 311, the memory 321, ..., and the memory 331 respectively provided in the USB connector 31, the USB connector 32, ..., and the USB connector 33.

In a step 006, the USB/SAS converter 5 executes the protocol conversion of the pluralities of the data and commands respectively stored in the memory 311, the memory 321, ..., and the memory 331 from the USB format to the SAS format. For example, a data unit of transmission/transfer is converted from USB packets to SAS frames.
In a step 007, SAS I/Fs respectively provided in the SAS connector 41, the SAS connector 42, ..., and the SAS connector 43 execute each transmission processing to transmit each of the pluralities of the data and commands which are converted in the SAS data format and are respectively stored in the memory 411, the memory 421, ..., and the memory 431 respectively provided in the SAS connector 41, the SAS connector 42, ..., and the SAS connector 43 to the SAS-compliant information processor 21, the SAS-compliant information processor 22, ..., and the SAS-compliant information processor 23 respectively.

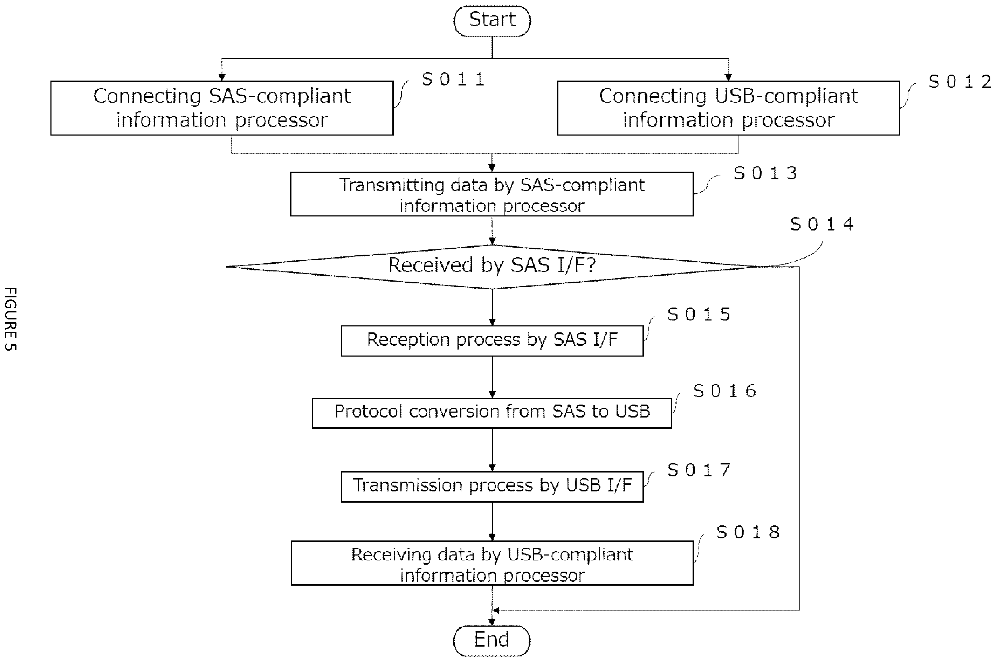

Next, according to the flowchart shown in Fig. 5, a data transmission from the SAS-compliant information processor to the USB-compliant information processor executed by the information processor of the embodiment of the present invention is explained.
As shown in Fig. 5, in a step S011, the information processor 1 connects to at least one SAS-compliant information processor, including the SAS-compliant information processor 21, the SAS-compliant information processor 22, ..., and the SAS-compliant information processor 23, and in a step S012, the information processor 1 connects to at least one USB-compliant information processor, including the USB-compliant information processor 11, the USB-compliant information processor 12, ..., and the USB-compliant information processor 13.
In a step S013, each of the SAS-compliant information processor 21, the SAS-compliant information processor 22, ..., and the SAS-compliant information processor 23 transmits the data and commands.
In a step 014, when the respective SAS I/Fs, each of which is provided in the SAS connector 41, the SAS connector 42, ..., and the SAS connector 43, receive each of the pluralities of the data and commands, the process proceeds to a step S015.

In the step 014, when the respective SAS I/Fs, each of which is provided in the SAS connector 41, the SAS connector 42, ..., and the SAS connector 43, do not receive each of the pluralities of the data and commands, the process terminates.
In the step 015, the SAS I/Fs, each of which is provided in the SAS connector 41, the SAS connector 42, ..., and the SAS connector 43, execute each reception processing, and respectively store each of the pluralities of the data and commands into the memory 411, the memory 421, ..., and the memory 431 respectively provided in the the SAS connector 41, the SAS connector 42, ..., and the SAS connector 43.
In a step 016, the USB/SAS converter 5 executes the protocol conversion of the pluralities of the data and commands respectively stored in the memory 411, the memory 421, ..., and the memory 431 from the SAS format to the USB format. For example, a data unit of transmission/transfer is converted from SAS frames to USB packets.

In a step 017, the USB connector 31, the USB connector 32, ..., and the USB connector 33 execute each transmission processing to transmit each of the pluralities of the data and commands which are converted in the USB data format and are respectively stored in the memory 311, the memory 321, ..., and the memory 331 respectively provided in the USB connector 31, the USB connector 32, ..., the USB connector 33 to the USB-compliant information processor 11, the USB-compliant information processor 12, ..., the USB-compliant information processor 13 respectively.

The embodiments disclosed here are in all respects illustrative and should not be considered restrictive. The scope of the present invention is indicated by the claims, not in the sense given above, and is intended to include all alterations within the meaning and scope equivalent to the claims.

Furthermore, in the processes or operations described above, the processes or operations may be freely altered as long as there are no inconsistencies in the processes or operations, such as using data that is not yet available in a certain step. The examples described above are illustrative examples to explain the present invention, and the present invention is not limited to these examples. The present invention can be implemented in various forms without departing from the gist thereof.

### REFERENCE SIGNS LIST

1...information processor (USB/SAS protocol converter)
5...USB/SAS converter
11, 12, 13...USB-compliant information processor
31, 32, 33...USB connector
311, 321, 331...memory
21, 22, 23...SAS-compliant information processor
41, 42, 43...SAS connector
411, 421, 431...memory
51...controller
52...storage

## Claims

1. An information processor executing a USB/SAS protocol conversion for enabling data and commands to be transmitted and received between a USB-compliant information processor and a SAS-compliant information processor, comprising:
at least one USB connector for connecting the USB-compliant information processor;
at least one SAS connector for connecting the SAS-compliant information processor; and
a USB/SAS converter for converting between a USB protocol and a SAS protocol;
wherein the USB connector is connected to the USB/SAS converter via a bus, and the USB/SAS converter is connected to the SAS connector via another bus,
wherein the data and commands transmitted from the USB-compliant information processor are received to be stored in a memory provided in the USB connector in a USB protocol format, wherein the data and commands are converted into a SAS protocol format by the USB/SAS converter, and
wherein the data and commands converted into the SAS protocol format by the USB/SAS converter are stored in another memory provided in the SAS connector and are transmitted to the SAS-compliant information processor from said another memory,
**characterized in that** the USB/SAS converter is allowed to alter the processing algorithm thereof and is capable of executing parallel processing.

2. An information processing method executing a USB/SAS protocol conversion for enabling data and commands to be transmitted and received between a USB-compliant information processor and a SAS-compliant information processor, comprising:
a USB connection step for connecting the USB-compliant information processor via at least one USB connector;
a SAS connection step for connecting the SAS-compliant information processor via at least one SAS connector; and
a USB/SAS conversion step for converting between a USB protocol and a SAS protocol by a USB/SAS converter;
wherein the USB connector is connected to the USB/SAS converter via a bus, and the USB/SAS converter is connected to the SAS connector via another bus, and
wherein the method further comprises:
a USB reception and storage step for receiving the data and commands transmitted from the USB-compliant information processor to store the data and commands into a memory provided in the USB connector in a USB protocol format;
a SB/SAS conversion step for converting the data and commands into a SAS protocol format by the USB/SAS converter; and
a SAS storage and transmission step for storing the data and commands converted into the SAS protocol format by the USB/SAS converter in another memory provided in the SAS connector and transmitting the data and commands to the SAS-compliant information processor from said another memory;
**characterized in that** the USB/SAS converter is allowed to alter the processing algorithm thereof and is capable of executing parallel processing.

3. An information processor executing a USB/SAS protocol conversion for enabling data and commands to be transmitted and received between a USB-compliant information processor and a SAS-compliant information processor, comprising:
at least one USB connector for connecting the USB-compliant information processor;
at least one SAS connector for connecting the SAS-compliant information processor; and
a USB/SAS converter for converting between a USB protocol and a SAS protocol;
wherein the data and commands received from the USB-compliant information processor are transmitted to the SAS-compliant information processor via the USB connector, the USB/SAS converter, and the SAS connector,
wherein the data and commands received from the SAS-compliant information processor are transmitted to the USB-compliant information processor via the SAS connector, the USB/SAS converter, and the USB connector, and
wherein the USB/SAS converter is compliant with at least one data transmission protocol,
**characterized in that** the USB/SAS converter is capable of rewriting the data transmission protocol.

4. The information processor according to claim 3, wherein the USB/SAS converter comprises a controller that adds, modifies, deletes, and executes a program with a new function, and a storage that stores the program.

5. An information processing method executing a USB/SAS protocol conversion for enabling data and commands to be transmitted and received between a USB-compliant information processor and a SAS-compliant information processor, comprising:
a USB connection step for connecting the USB-compliant information processor via at least one USB connector;
a SAS connection step for connecting the SAS-compliant information processor via at least one SAS connector; and
a USB/SAS conversion step for converting between a USB protocol and a SAS protocol by a USB/SAS converter;
wherein the method further comprises:
a SAS transmission step for transmitting the data and commands received from the USB-compliant information processor to the SAS-compliant information processor via the USB connector, the USB/SAS converter, and the SAS connector; and
a USB transmission step for transmitting the data and commands received from the SAS-compliant information processor to the USB-compliant information processor via the SAS connector, the USB/SAS converter, and the USB connector; and
wherein the USB/SAS converter is compliant with at least one data transmission protocol,
**characterized in that** the USB/SAS converter is capable of rewriting the data transmission protocol.

6. The information processing method according to claim 5, wherein the method further comprises a control step for adding, modifying, deleting, and executing a program with a new function by the USB/SAS converter, and a storage step for storing the program by the USB/SAS converter.
